# EUROPÄISCHE PATENTSCHRIFT

(11) **EP 3 642 373 B1**
(45) Veröffentlichungstag und Bekanntmachung des Hinweises auf die Patenterteilung: **08.06.2022**
(21) Anmeldenummer: 18726727.3
(22) Anmeldetag: 05.04.2018
(51) Int. Cl.: C22B 7/00, B22D 17/00, C22B 9/16, C22B 21/00

(54) **VERFAHREN UND VORRICHTUNG ZUR HERSTELLUNG VON STÜCKIGEM AUFGABEGUT AUS METALL**
METHOD AND DEVICE FOR PRODUCING FEEDSTOCK IN PIECE FORM FROM METAL
PROCÉDÉ ET DISPOSITIF POUR LA PRÉPARATION DE CHARGES EN MORCEAUX EN MÉTAL

(30) Priorität: 23.06.2017 DE 102017114012
(43) Veröffentlichungstag der Anmeldung: 29.04.2020
(73) Patentinhaber: Norsk Hydro ASA, 0240 Oslo (NO)
(72) Erfinder: SCHARF-BERGMANN, Roland, 41516 Grevenbroich (DE); ORSUND, Roar, 6600 Sunndalsora (NO)
(74) Vertreter: Brinkmann & Partner
(86) Internationale Anmeldenummer: PCT/EP2018/058684
(87) Internationale Veröffentlichungsnummer: WO 2018/233887

(56) Entgegenhaltungen:
- EP-A1- 2 776 189
- AU-B2- 2001 281 596

## Beschreibung

Die Erfindung betrifft ein Verfahren und eine Vorrichtung zur Herstellung von stückigem Aufgabegut aus Metall, insbesondere Aluminium und/oder Aluminiumlegierungen, für eine Metall- insbesondere Aluminiumgießanlage.

Für die Herstellung von Konstruktionselementen aus Metall, insbesondere aus Aluminium und Aluminiumlegierungen wird stückiges Aufgabegut aus Metall, insbesondere aus Aluminium und/oder aus Aluminiumlegierungen aufgeschmolzen. Dieses Aufgabegut wird aus Schrottteilen hergestellt, wobei es sich bei diesen Schrottteilen um Recyclingmaterial handeln kann. Hierunter fallen auch Späne oder Metallstaub, die beziehungsweise der bei einer spanabhebenden Bearbeitung eines Metallblocks, insbesondere Aluminiumblocks entstehen. Ebenfalls unter Schrottteile zu subsumieren sind Stanzabfälle, die beim Ausstanzen von beispielsweise Aluminiumplatten für die Herstellung einer Fahrzeugkarosserie anfallen. Insbesondere bei der Verarbeitung von Aluminium fällt ein hoher Prozentsatz der ursprünglich eingesetzten Aluminiummenge bei der Produktion als Schrottteile, nämlich Abfallstoffe an.

Diese Schrottteile aus Aluminium werden in Fraktionen relativ homogener, chemischer Zusammensetzung, insbesondere Legierung sortiert. Dem Grunde nach spielt die Geometrie der Schrottteile hier nur eine untergeordnete Rolle. Von weitaus größerer Bedeutung ist die zu erzeugende Legierung im Aufgabegut, bei dem es sich beispielsweise um Block- oder Stangenmaterial für die Beschickung eines Schmelzofens handeln kann. Um die erforderliche zu erzeugende Legierung im Aufgabegut zu erreichen, ist es daher bekannt, eine Fraktion aus verschiedenen Schrottteilen derart zusammenzustellen, dass bei dem nachfolgenden Schmelzprozess eine Schmelze mit der erforderlichen Legierung für das Aufgabengut entsteht. Die Zuführung der Schrottteile zum Schmelzofen erfolgt insbesondere nach Schmelzgesichtspunkten, so dass beispielsweise vergleichsweise leichte Fraktionen dem Schmelzofen als erstes zugeführt werden, woraufhin vergleichsweise schwere Fraktionen auf den leichten Fraktionen angeordnet werden, um diese zu überdecken, was einem Aufschwimmen der vergleichsweise leichten Fraktionen entgegenwirkt. Leichte Fraktionen in diesem Sinne können beispielsweise Späne oder Staub sein.

Infolge des Schmelzens der unterschiedlichen Schrottteile ergibt sich eine Homogenisierung hinsichtlich der Legierung beziehungsweise chemischen Zusammensetzung. Das aufgeschmolzene Metall wird sodann zu homogenisierten Metallrohlingen gegossen. Hierbei handelt es sich um ein Vorprodukt für das stückige Aufgabegut, welches dann nachfolgend beim Hersteller von Metallbauteilen, wie beispielsweise Motorblöcken aufgeschmolzen und in die entsprechende Form gegossen werden kann.

Zuvor werden jedoch die Metallrohlinge in einem zweiten Schritt einem Gießofen zugeführt. In diesem Gießofen findet eine Nachgattierung statt. Unter der Nachgattierung ist zu verstehen, dass den aufgeschmolzenen Metallrohlingen Legierungsstoffe zugegeben werden, so dass die wünschenswerterweise zu erreichende Zielchemie beziehungsweise die beabsichtigte Legierung erreicht wird. Die den Gießofen verlassende Schmelze wird sodann zu Formkörpern, nämlich dem stückigen Aufgabegut gegossen, die nach Erkaltung paketiert und zur Weiterverarbeitung an den Kunden, nämlich den Hersteller entsprechender Metallteile geliefert wird. Man spricht hier auch von sogenannten Masseln, bei denen es sich um barrenförmige Elemente handelt.

Insbesondere im zuletzt beschriebenen Schritt des Aufschmelzens im Gießofen nimmt die Schmelze Sauerstoff und Wasserstoff aus der Umgebung auf. Dies beeinträchtigt die gewünschte Zielchemie. Aus diesem Grunde ist es auch erforderlich, dass das Aufgabegut beim Verwender bzw. Hersteller von Metallbauteilen erneut eingeschmolzen werden muss, so dass Sauerstoff und Wasserstoff ausgetrieben werden können. Desweiteren ermöglicht dies auch eine zusätzliche Veredelung der Legierung durch den Verwender des Aufgabeguts. Beispielswiese kann es sich hierbei um einen Hersteller von Motorblöcken für die Automobilindustrie handeln.

Bei diesem vorbekannten Verfahren ist es nachteilig, dass bereits die beiden Schmelzprozesse vor der Herstellung des Aufgabeguts ein extrem hoher Energiebedarf erforderlich ist. Darüber hinaus entstehen hierbei in nicht unerheblichem Maße Abgase, sodass Filtersysteme eingesetzt werden müssen. Diese Filtersysteme unterliegen einem Verschleiß und sind daher regelmäßig zu warten und in Intervallen auch zu erneuern. Die Anlagentechnik zum Aufschmelzen von Metall ist ferner mit sehr hohen Investitionskosten verbunden. Desweiteren ist es hier von Nachteil, dass entsprechende Anlagen sowie deren Betrieb genehmigungspflichtig sind und nicht in jedem Bereich genehmigt werden. Hieraus resultiert wiederum, dass entsprechende Anlagen in der Regel mit großer räumlicher Distanz vom Verwender des Aufgabeguts angeordnet sind, so dass sowohl für den Transport des Aufgabeguts zum Verwender als auch für den Transport der Schrottteile zur Anlage hohe Kosten zu erwarten sind.

Aus der EP 2 862 950 B1 ist beispielsweise ein Verfahren zur mechanischen Aufbereitung von Aluminiumschrott bekannt. Bei diesem Verfahren wird in einem ersten Schritt eine Zerkleinerung des Aluminiumschrotts durchgeführt, in einem zweiten Schritt der zerkleinerte Aluminiumschrott einer Siebanlage zugeführt und in eine Fraktion aus Unterkornmaterialien einerseits und einer Fraktion aus Überkornmaterialien andererseits unterteilt. In einem dritten Schritt wird die Fraktion aus Überkornmaterialien vergleichmäßigt, bevor in einem vierten Schritt die vergleichmäßigte Fraktion aus Überkornmaterialien als Sortiergut in einer Röntgeneinrichtung einer Dichtebestimmung mittels Röntgentransmission unterzogen wird. Anschließend werden in einem fünften Schritt Materialpartikel aus dem Sortiergut mit einer oberhalb eines vorgebbaren Grenzwertes liegenden Dichte pneumatisch aussortiert.

Die derart erzielte Fraktion aus Aluminiumschrott bestimmter Partikelgröße ist sodann geeignet einer Schmelzanlage zugeführt zu werden, um hieraus eine Schmelze bestimmter Legierung und damit chemischer Zusammensetzung herzustellen.

Weiterhin ist aus der EP 2 086 697 B1 ein Schneckenextruder zum fortlaufenden Extrudieren von Materialien mit hoher Viskosität, insbesondere Metall, wie etwa Aluminium und seine Legierungen bekannt, der eine archimedische Schnecke aufweist, die drehbar innerhalb einer Auskleidung eines Schneckengehäuses mit einem Einlass zum Zuführen des Materials, das extrudiert werden soll, eine Extrusionskammer und eine Extrusionswerkzeugbaugruppe mit einem Formwerkzeug aufweist, dass die Form des gewünschten Extrusionsprodukts ausbildet. Bei diesem Schneckenextruder ist die Schnecke und die Auskleidung derart gestaltet, dass die erforderliche Verdichtung am stromabwärtigen Ende der Schnecke zur Extrusionskammer hin entsprechend bis zu 540° der Drehung der Schnecke oder bis zu 1,5-Drehung der Schneckenganglänge stattfindet. Ferner ist vorgesehen, dass das verdichtete Metall, das in der Verdichtungszone ausgebildet ist, und der massive Metallstopfen in der Extrusionskammer von starrer Drehung ausgegrenzt ist, wodurch der erforderliche Verdichtungs- und Extrusionsdruck erzielt ist.

Relevanter Stand der Technik ist auch aus den Dokumenten EP 2 776 189 A1 und AU 2001 281 596 B2 bekannt.

Ausgehend von diesem Stand der Technik liegt der Erfindung die Aufgabe zugrunde, ein gattungsgemäßes Verfahren beziehungsweise eine gattungsgemäße Vorrichtung derart weiterzubilden, dass damit in einfacher und deutlich kostengünstiger Weise Schrottteile aus Metall zu einem Aufgabegut für Schmelzprozesse verarbeitet werden können, wobei eine entsprechende Vorrichtung beziehungsweise ein entsprechendes Verfahren standortunabhängig betrieben werden kann und darüber hinaus Aufgabegut mit einer zu erzeugenden Legierung und einer homogenen Legierungsverteilung erzeugbar ist.

Die **Lösung** dieser Aufgabenstellung sieht ein Verfahren mit den Merkmalen des Anspruchs 1 beziehungsweise einer Vorrichtung mit den Merkmalen des nebengeordneten Vorrichtungsanspruchs vor.

Bei dem erfindungsgemäßen Verfahren ist vorgesehen, dass die Schrottteile aus Metall, insbesondere aus Aluminium und/oder Aluminiumlegierungen nach ihren Legierungsbestandteilen und/oder Legierungsgehalten sortiert und anschließend ausgehend von einer zu erzeugenden Legierung im Aufgabegut die Schrottteile zu einer, eine homogene Legierungsverteilung aufweisenden Zusammensetzung gemischt und einer Presse zugeführt werden, in der die Schrottteile der Zusammensetzung mit einem Druck beaufschlagt werden, der die Schrottteile unter Erzeugung einer Temperatur verdichtet, wobei die Schrottteile infolge der Druckbeaufschlagung bis zur Übergangstemperatur zwischen fest und flüssig zumindest eines Teils der Schrottteile und/oder deren Legierungen und/oder deren Legierungsbestandteilen erhitzt werden, bevor das Aufgabegut in einer bestimmten geometrischen Form ausgegeben wird.

Bei dem erfindungsgemäßen Verfahren wird daher ausgehend von den Schrottteilen als erstes eine Zusammensetzung hergestellt. Diese Zusammensetzung soll eine homogene Legierungsverteilung aufweisen. Zu diesem Zweck werden unterschiedliche Schrottteile nach Analyse ihrer Legierungen beziehungsweise Legierungszusammensetzung entsprechend dem herzustellenden Aufgabegut zusammengestellt und gemischt. Diese Zusammensetzung wird sodann einer Presse zugeführt, in der die Schrottteile der Zusammensetzung mit einem Druck beaufschlagt werden. Hierbei werden die Schrottteile unter Erzeugung einer Temperatur verdichtet. Dabei werden die Schrottteile infolge der Druckbeaufschlagung bis zur Übergangstemperatur zwischen fest und flüssig zumindest eines Teils der Schrottteile und/oder deren Legierungen und/oder deren Legierungsbestandteilen erhitzt. An der Schwelle zur Übergangstemperatur zwischen fest und flüssig ist der sog. thixotrope Zustand erreicht. Dieser zeichnet sich unter anderem dadurch aus, dass die Viskosität des Materials, das heißt der Schrottteile und/oder deren Legierungen und/oder deren Legierungsbestandteilen unter Einwirkung von Scherkräften verringert ist. Es entsteht so ein knetmasseartiger Zustand, der es ermöglicht, das Material sehr präzise zu formen und/oder in Formen zu pressen. Von besonderem Vorteil ist in diesem Zusammenhang, dass das spätere Aufgabegut infolge des thixotropen Schmelzens eine sehr homogene Verteilung der Legierungsbestandteile aufweist.

Die erfindungsgemäße Verfahrensdurchführung ermöglicht es insgesamt, allein durch Vorsortierung, Mischung und mechanische Druckbeaufschlagung Aufgabegüter herzustellen, die einerseits eine gewünschte Geometrieausgestaltung aufweisen und die andererseits eine homogen verteilte Legierungszusammensetzung aufweisen.

Das thixotrope Schmelzen, das heißt das Erhitzen der Schrottteile infolge der Druckbeaufschlagung bis zur Übergangstemperatur zwischen fest und flüssig ist zwar bevorzugt, doch es kann alternativ auch vorgesehen sein, die Schrottteile infolge der Druckbeaufschlagung bis zur Schmelztemperatur zumindest eines Teils der Schrottteile und/oder deren Legierungen und/oder deren Legierungsbestandteilen zu erhitzen. Gemäß dieser Verfahrensalternative werden die Schrottteile zumindest teilweise soweit aufgeschmolzen, dass ein Zusammenfügen der Schrottteile möglich ist. Hierbei können einzelne Legierungsbestandteile beispielsweise die Funktion eines Bindemittels übernehmen, soweit diese aufgrund der Temperatur während des Verdichtens aufschmelzen und anschließend wieder unter Verbindung weiterer Schrottteile aushärten. Dieser Vorgang erfolgt aber erst nachdem die Schrottteile in eine bestimmte geometrische Form umgeformt sind, die dem gewünschten Aufgabegut, beispielsweise einem Stangenmaterial entspricht.

Dieses Aufgabegut ist dann geeignet, um im Folgenden einer Metallgießanlage, insbesondere einer Aluminiumgießanlage zugeführt zu werden, um hieraus Konstruktionsteile herzustellen, wie beispielsweise Blöcke zur Herstellung von Motorenblöcke oder aber auch Aluminiumplatten, die in einem weiteren Produktionsschritt kaltgeformt und bearbeitet, beispielsweise ausgestanzt werden.

Bei größeren Schrottteilen hat es sich als vorteilhaft erwiesen, die Schrottteile vor der Sortierung zu zerkleinern. Insbesondere bei Rückständen von Ausstanzvorgängen kann es sich durchaus um Schrottteile handeln, die einem erfindungsgemäßen Verfahren nicht ohne vorherige Zerkleinerung zugeführt werden können. Durch die Zerkleinerung werden Partikel bestimmter Zusammensetzung auch sicher ausfindig gemacht, um diese aussortieren zu können, wobei als Aussortierkriterium die physikalische Größe der Dichte verwendet werden kann, die hinsichtlich möglicher Materialkomponenten und/oder Zusammensetzungen charakteristisch ist. Der Verfahrensschritt der Zerkleinerung kann dabei mehrstufig durchgeführt werden. Es ist indes eine zweistufige Zerkleinerung bevorzugt, wobei in der ersten Zerkleinerungsstufe beispielsweise ein Shredder oder eine Rotormühle zum Einsatz kommt. Die den Shredder beziehungsweise die Rotormühle verlassenden Partikel besitzen in der Regel eine kubische oder kugelartige Ausgestaltung und können eine Größe von bis zu 200 mm aufweisen.

In einer zweiten Zerkleinerungsstufe kommen die zuvor geshredderten Schrottteile in einen nachgeschalteten Nachzerkleinerer beziehungsweise eine Schneidmühle. Hier findet eine Nachzerkleinerung statt, wobei die den Nachzerkleinerer beziehungsweise die Schneidmühle verlassenden Partikel flächenartig beziehungsweise scheibenförmig ausgebildet sind und eine Größe von beispielsweise bis zu 80 mm aufweisen. Dem Zerkleinerungsschritt nachfolgend kann ein weiterer Verfahrensschritt vorgesehen sein, in dem die zerkleinerten Schrottteile einer Siebanlage zugeführt werden, um die Schrottteile in zwei Materialkörnungen zu trennen, wobei sich zwei Fraktionen ergeben, nämlich eine Fraktion aus Unterkornmaterialien einerseits und eine Fraktion aus Überkornmaterialien andererseits. Je nach eingesetzten Sieben wird die Größe der Überkornmaterialien beziehungsweise der Unterkornmaterialien festgelegt. Beispielsweise hat das Überkornmaterial eine Größe von mehr als 0,3 mm, mehr bevorzugt von mehr als 3 mm, noch mehr bevorzugt von mehr als 10 mm. Körner mit einer kleineren Korngröße stellen das Unterkornmaterial dar.

Nach einem weiteren Merkmal der Erfindung ist vorgesehen, dass die Schrottteile vor der Zerkleinerung entsprechend der zu erzeugenden Legierung im Aufgabegut zusammengesetzt und einer Zerkleinerungseinrichtung zugeführt werden. Die zerkleinerten Schrottteile werden sodann in einem weiteren Schritt hinsichtlich ihrer chemischen Zusammensetzung nachsortiert. Es werden also Fraktionen einheitlicher Legierungen geschaffen. Diese Fraktionen wiederum können in Bunkern zwischengespeichert werden.

Bei dem erfindungsgemäßen Verfahren ist vorgesehen, dass zur Erzielung der zu erreichenden chemischen Zusammensetzung des Aufgabeguts, beispielsweise der Masseln vorberechnete Mengen an vorbestimmten Fraktionen unterschiedlicher Schrottteile miteinander zu einer homogenen Mischung vermischt werden. Es werden also in Entsprechung der gewünschten Zielchemie beziehungsweise der erforderlichen Legierung des Aufgabeguts entsprechende Fraktionen dem Grunde nach einerseits sowie ihrer jeweiligen Menge nach andererseits miteinander kombiniert und vermischt, so dass eine homogene Verteilung innerhalb der Mischfraktion, nämlich der Zusammensetzung entsteht.

Nach einem weiteren Merkmal der Erfindung ist vorgesehen, dass die homogene Zusammensetzung einem Extruder zugeführt wird. In diesem Extruder werden die vorzugsweise zerkleinerten Schrottteile einem Druck ausgesetzt, bei dem eine Temperatur erzeugt wird, die thixotropes Schmelzen zumindest eines Teils der Schrottteile und/oder deren Legierungen und/oder deren Legierungsbestandteilen zur Folge hat. Die Druckbeaufschlagung im Extruder führt mithin dazu, dass die Schrottteile bis zur Übergangstemperatur zwischen fest und flüssig erhitzt werden, infolge dessen sich die Viskosität des Materials der soweit erhitzten Schrottteile verringert, was zu einem knetmasseartigen Zustand führt. Dies gestattet es, am Ausgang des Extruders ein Aufgabegut bestimmter geometrischer Form, insbesondere in Form eines stranggepressten Strangmaterials ausgeben zu können.

Es ist in diesem Zusammenhang insbesondere die Verwendung eines Schrauben- oder Schneckenextruders bevorzugt. Alternativ kann als Extruder auch ein Kolbenextruder eingesetzt werden. Der Schneckenextruder hat jedoch gegenüber dem Kolbenextruder den Vorteil, dass eine kontinuierliche Verfahrensdurchführung möglich ist, so dass bei kontinuierlicher Bereitstellung von Schrottteilen sowohl eine kontinuierliche Schrottteilaufbereitung durch Sortieren, Zerkleinern und Mischen als auch eine kontinuierliche Erzeugung von Aufgabegut durch Zuführung von aufbereiteten Schrottteilen zum Extruder und dortiger Temperaturerzeugung durch Druckbeaufschlagung ermöglicht ist. Gegenüber einem Kolbenextruder hat der Schneckenextruder zudem den Vorteil, verschleißarmer und energieeffizienter betrieben werden zu können.

Die einzelnen Fraktionen der Schrottteile mit bekannter Zusammensetzung, insbesondere Legierung werden in einer für die zu erzeugende Legierung im Aufgabegut aus einer Bevorratung abgezogen und einer Mischeinrichtung zugeführt. Hierbei werden die aus der Bevorratung abgezogenen Schrottteile in den erforderlichen Gewichtsanteilen entsprechend ihrer Legierungszusammensetzung gewogen und nach einer vorgegebenen Zusammenstellung der Mischeinrichtung zugeführt. Bevorzugt sind hierzu einzelne Wiegevorrichtungen im Bereich der Bevorratung vorgesehen, die dazu dienen, einzelne Fraktionen der Schrottteile abzuwiegen, bevor diese dann mit anderen Fraktionen der Mischeinrichtung zugeführt werden.

Die derart zusammengesetzte Charge aus Schrottteilen unterschiedlicher Legierungen werden nach dem Mischvorgang dem Pressvorgang zugeführt, und dies bevorzugterweise kontinuierlich. Dabei kommt die kontinuierliche Zuführung zur Pressvorrichtung insbesondere dann in Betracht, wenn als Pressvorrichtung ein kontinuierlich arbeitender Schneckenextruder zum Einsatz kommt. Im Ergebnis ist so eine kontinuierliche Erzeugung von Aufgabegut gestattet.

Die dem vorzugsweise als Schrauben- oder Schneckenextruder ausgebildeten Extruder zugeführte Charge aus Schrottteilen wird infolge der Verdichtung und der dadurch entstehenden Reibkräfte erhitzt, und zwar bis auf eine Temperatur, die der Übergangstemperatur zwischen fest und flüssig zumindest eines Teils der Schrottteile entspricht. Es entsteht so ein quasi stoffschlüssiger Verbund der aufgegebenen Schrottteile, die an der Schwelle zur Übergangstemperatur zwischen fest und flüssig im sog. thixotropen Zustand fließfähige Eigenschaften aufweisen, was eine präzise Formgebung gestattet. Zwecks Formgebung verfügt der Extruder abgabeseitig über eine Matrize und/oder es ist dem Extruder eine Matrize nachgeschaltet, die der Formgebung der verpressten Teile zu einem kontinuierlichen Strang, beispielsweise mit rechteckigem oder kreisförmigem Querschnitt dient.

Das Aufgabegut wird somit nach einem weiteren Merkmal der Erfindung als kontinuierliches Strangmaterial abgezogen und bedarfsgerecht abgelängt. Insbesondere bei einem Strangmaterial mit rechteckigem Querschnitt entstehen damit barrenförmige Elemente, die gut stapelbar sind. Ein beispielsweise auf einer Palette angeordneter Stapel derartiger Barren ist sodann versandfertig und kann beispielsweise per Lastkraftwagen und/oder Schienenverkehr an den Verwender geliefert werden.

Zwar ist festzustellen, dass durch ein Verzicht des Aufschmelzens der Schrottteile eine Oxidationsschicht auf der Oberfläche dieser Schrottteile entstanden sein kann. Im Hinblick auf die weitere Verarbeitung, bei der das Ausgabegut einem Schmelzverfahren zugeführt wird, ist dieser Nachteil aber nicht von Relevanz, da bei der Verarbeitung des Aufgabeguts im Zuge des Aufschmelzens ohnehin Sauerstoff und Wasserstoff ausgetrieben werden können, so dass gegebenenfalls vorhandenes Oxidationsmaterial am Aufgabegut nicht von Bedeutung ist.

Darüber hinaus hat das erfindungsgemäße Verfahren trotz des Verzichts auf einen Schmelzprozess und die damit verbundenen Nachteile einer nicht vollständigen Homogenität des Aufgabeguts den Vorteil, dass aufgrund der Herstellung des Aufgabeguts in einer bestimmten geometrischen Form, beispielsweise in Form von Masseln oder anderen barrenartigen Elementen diese aus einem Strangmaterial hergestellt werden, so dass sich eine erhöhte Homogenität bereits dadurch ausbildet, dass eine Charge Aufgabegut aus einer Charge zusammengestellter Schrottteile hergestellt wird, so dass sich insgesamt über die gesamte Charge des Aufgabeguts wiederum eine hohe Homogenität des Aufgabeguts ergibt.

Das Aufgabegut, welches ohne vorheriges Aufschmelzen der Schrottteile ausgebildet wird, eignet sich damit in besonderer Weise für eine übliche Verarbeitung bei der Herstellung von Bauteilen beispielsweise aus Aluminium. Der wesentliche Vorteil der Erfindung liegt unter anderem in dem weitaus geringeren Energiebedarf bei der Herstellung des Aufgabeguts. Bei dem erfindungsgemäßen Verfahren ist lediglich Energie für das Verpressen bereitzustellen und es wird weder Energie für einen thermischen Aufschluss benötigt noch bedarf es Filteranlagen zur Reinigung etwaiger Abgase. Hieraus resultiert auch, dass eine erfindungsgemäße Vorrichtung zur Herstellung von stückigem Aufgabegut aus Metall, insbesondere Aluminium und/oder Aluminiumlegierungen deutlich geringere Investitionskosten verursachen. Aufgrund der Vermeidung von Abgasen und aufgrund des geringeren Energiebedarfs sind entsprechende Vorrichtungen auch weniger restriktiv bei der Genehmigung des Aufbaus und der Nutzung zu handhaben, so dass entsprechende Vorrichtungen an deutlich mehr geeigneten Stellen aufbaubar und betreibbar sind. Beispielsweise kann es nach einem weiteren Merkmal der Erfindung vorgesehen sein, dass als Schrottteile Metallteile, wie Späne, Staub, Schmelzenrückstände aus der Produktion von Metallteilen, wie insbesondere der Herstellung von Aluminiumgussteilen, Aluminiumstanzteilen oder dergleichen, insbesondere aus der Verwendung des Aufgabeguts verwendet werden. Bei dieser Ausgestaltung hat es sich als vorteilhaft erwiesen, dass eine entsprechende Vorrichtung direkt im Bereich der Schmelzanlage einsetzbar ist, so dass auch der Transport von Aufgabegut zum Verarbeiter beziehungsweise von Schrottteilen dem Hersteller des Aufgabeguts deutlich verringert, wenn nicht gar vermieden werden kann. Eine derartige Vorgehensweise bietet sich immer dann an, wenn im Betrieb des Herstellers, das heißt des Verwenders von Aufgabegut entsprechende Schrottteile anfallen, die dann ohne zusätzliche Transportkosten und legierungstreu sofort zu neuem Aufgabegut verpresst und im Betrieb des Herstellers weiterverarbeitet werden können. Zu berücksichtigen ist hierbei, dass beispielsweise bei der Herstellung von Aluminiumendprodukten Frässpäne anfallen, die zum Teil bis zu 90% der eingesetzten Gesamtmenge des Aluminiums entsprechen. Diese Späne können unmittelbar nach ihrer Entstehung in dem beschriebenen Verfahren verarbeitet werden. Eine Verunreinigung dieser Späne ist im Übrigen unschädlich, da das Aufgabegut im folgenden Verfahren aufgeschmolzen wird, so dass Fremdstoffe ausgetrieben werden können.

Das voranstehend beschriebene Verfahren wird vorzugsweise mit einer Vorrichtung durchgeführt, die eine, mehrere Lagerbereiche für Schrottteile aus Metall, insbesondere aus Aluminium und/oder Aluminiumlegierungen aufweisende Bevorratungseinrichtung hat, in der die Schrottteile nach ihren Legierungsbestandteilen und/oder Legierungsgehalten bevorratet werden können. Desweiteren weist die erfindungsgemäße Vorrichtung eine Mischvorrichtung auf, in der die aus den Lagerbereichen in einem vorbestimmten Verhältnis abgezogenen Schrottteile zur Erzielung einer zu erzeugenden Legierung im Aufgabegut zu einer, eine homogene Legierungsverteilung aufweisende Zusammensetzung gemischt werden. Schließlich ist eine Pressvorrichtung vorgesehen, der die Zusammensetzung zugeführt und in der die Zusammensetzung mit einem Druck unter Erzeugung einer Temperatur verdichtet wird, wobei die Schrottteile infolge der Druckbeaufschlagung bis zur Übergangstemperatur zwischen fest und flüssig zumindest eines Teils der Schrottteile und/oder deren Legierungen und/oder deren Legierungsbestandteilen erhitzt werden, bevor das Aufgabegut in einer bestimmten geometrischen Form ausgegeben wird.

Ergänzend kann eine Zerkleinerungsvorrichtung vorgesehen sein, die der Bevorratungseinrichtung nachgeschaltet wird. In diesem Fall werden die Schrottteile aus der Bevorratungseinrichtung in der erforderlichen Quantität und/oder Qualität aus der Bevorratungseinrichtung abgezogen und der Zerkleinerungsvorrichtung zugeführt, um die Schrottteile auf eine Größe zu zerkleinern, die es erlaubt, die Schrottteile der Pressvorrichtung zuzuführen. Zu große Schrottteile können beispielsweise in einem vorhergehenden Schritt abgetrennt werden, beispielweise in einer Siebeinrichtung.

Ergänzend kann nach der erfindungsgemäßen Vorrichtung vorgesehen sein, dass der Pressvorrichtung eine Mischeinrichtung vorgeschaltet ist, der einzelne, aus der Bevorratungseinrichtung abgezogene Fraktionen der Schrottteile mit bekannter Zusammensetzung, insbesondere Legierung in einer für die zu erzeugende Legierung im Aufgabegut zugeführt werden. Es hat sich hinsichtlich der Mischeinrichtung als sinnvoll erwiesen, diese der Zerkleinerungsvorrichtung nachzuschalten, da die vergrößerte Homogenität der Zusammensetzung auf der Grundlage zerkleinerter Schrottteile einfacher zu erzielen ist.

Schließlich ist es nach einem weiteren Merkmal der Erfindung vorgesehen, dass der Pressvorrichtung eine Schneideinrichtung nachgeschaltet ist, mit der das als kontinuierliches Strangmaterial abgezogene Aufgabegut bedarfsgerecht abgelängt wird.

Weitere Merkmale und Vorteile der Erfindung ergeben sich aus der nachfolgenden Beschreibung der zugehörigen Zeichnung, in der eine bevorzugte Ausführungsform einer erfindungsgemäßen Vorrichtung dargestellt ist.

Gemäß einem weiteren Merkmal der Erfindung ist vorgesehen, dass der Pressvorrichtung eine Messeinrichtung nachgeschaltet ist. Diese Messeinrichtung kann der optional vorgesehenen Schneideinrichtung entweder vor- oder nachgeschaltet sein. Die Messeinrichtung dient dazu, dass der Pressvorrichtung entstammende Strangmaterial messtechnisch zu erfassen. Eine solche messtechnische Erfassung kann beispielsweise durch eine chemische Analyse erfolgen. Von Vorteil dieser Ausgestaltung ist, dass das Strangmaterial direkt nach einem Verlassen der Pressvorrichtung hinsichtlich einer wünschenswerterweise zu erzielenden Qualität untersucht werden kann, insbesondere hinsichtlich einer wünschenswerterweise zu erreichenden Legierungszusammensetzung. Als Messeinrichtung in diesem Sinne kann beispielsweise eine Einrichtung zur optischen Emissionsspektrometrie zum Einsatz kommen.

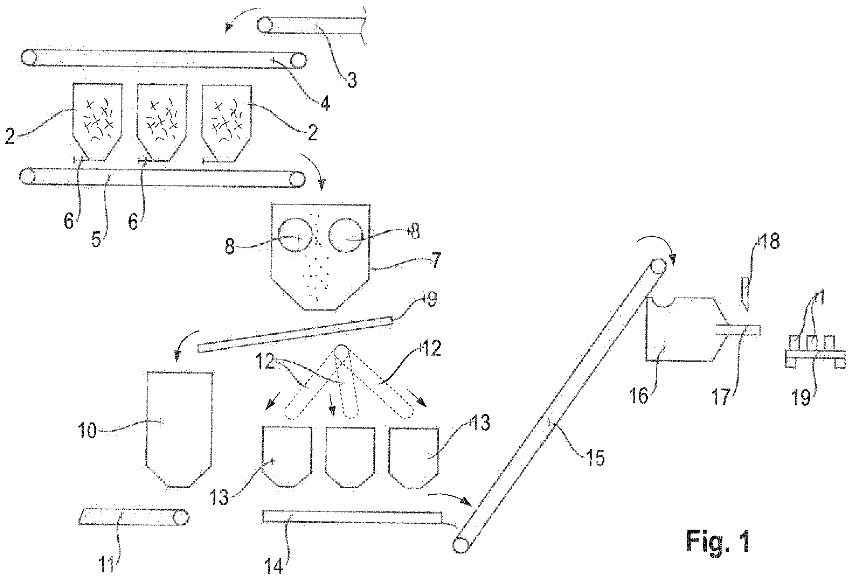

In der einzigen Figur 1 dargestellt ist eine Vorrichtung zur Herstellung von stückigem Aufgabegut 1 aus Metall, nämlich Aluminium beziehungsweise einer Aluminiumlegierung. Das Aufgabegut 1 ist vorgesehen für eine Aluminiumgießanlage, in der aus dem Aufgabegut 1 eine Schmelze hergestellt wird, die dann in eine Form gegossen und nach ihrem Erkalten entformt wird.

Die Vorrichtung weist mehrere Lagerbereiche 2 auf, in denen Schrottteile aus Aluminium beziehungsweise Aluminiumlegierungen unterschiedlicher Ausgestaltung hinsichtlich Zusammensetzung und/oder geometrischer Form und/oder Größe gelagert werden. Oberhalb der Lagerbereiche 2 ist ein Stetigförderer 3 angeordnet, der einen verfahrbaren Stetigförderer 4 aufweist, der in seiner Position zum Stetigförderer 3 verstellbar ist, so dass über den Stetigförderer 3 und den Stetigförderer 4 die einzelnen Lagerbereiche 2 mit Schrottteilen befüllt werden können.

Ein weiterer Stetigförderer 5 ist unterhalb der Lagerbereiche 2 angeordnet. Jeder Lagerbereich 2 weist ausgangsseitig einen Öffnungsschieber 6 auf. Die Öffnungsschieber 6 der Lagerbereiche 2 können über eine nicht näher dargestellte Steuerung geöffnet und geschlossen werden, wobei über die Öffnungszeit eine bestimmte Menge der in den einzelnen Lagerbereichen 2 gelagerten unterschiedlichen Schrottteile auf den Stetigförderer 5 übergeben werden.

Ergänzend kann eine nicht näher dargestellte Wiegevorrichtung vorgesehen sein, die zwischen dem Öffnungsschieber 6 und dem Stetigförderer 5 angeordnet ist, so dass die auf den Stetigförderer 5 zu übergebende Menge an Schrottteilen bestimmter Zusammensetzung, das heißt Legierung gewogen werden, um dann zusammen mit Schrottteilen aus den weiteren Lagerbereichen 2 derart zusammengeführt zu werden, dass die mit dem Stetigförderer 5 weggeförderten Schrottteile in einem Aufgabegut resultieren, welches eine vorbestimmte Legierung aufweist.

Der Stetigförderer 5 fördert die Schrottteile aus den Lagerbereichen 2 in eine Zerkleinerungsvorrichtung 7, die zwei rotierende Walzen 8 mit gegebenenfalls daran angeordneten Schlagleisten aufweist. Der Abstand zwischen den Walzen 8 beziehungsweise den daran angeordneten, nicht aber dargestellten Schlagleisten ist einstellbar, so dass mit der Zerkleinerungsvorrichtung 7 Schrottteile bestimmter geometrischer Ausgestaltung und Größe hergestellt werden können. Die die Zerkleinerungsvorrichtung 7 durchlaufenden Schrottteile gelangen sodann auf eine unterhalb der Zerkleinerungsvorrichtung 7 angeordnete Siebeinrichtung 9, die die zerkleinerten Schrottteile in zumindest zwei Größenfraktionen teilt, nämlich in ein sogenanntes Unterkornmaterial, das die Siebeinrichtung 9 passiert und ein Überkornmaterial, das die Siebeinrichtung 9 nicht passiert und über die Siebeinrichtung 9 einem Vorratsbehälter 10 zugeführt wird. Von diesem Vorratsbehälter 10 kann das Überkornmaterial über einen Stetigförderer 11 abgezogen und beispielsweise dem Stetigförderer 3 zur erneuten Zuführung zum Lagerbereich 2 übergeben werden.

Das Unterkornmaterial, welches die Siebeinrichtung 9 passiert, kann über eine verschwenkbare Schurre 12 unterschiedlichen Bunkern 13 zugeführt werden, in denen das Unterkornmaterial der Schrottteile bevorratet wird. Hierbei werden in den einzelnen Bunkern 13 unterschiedliche Qualitäten der Schrottteile bevorratet, nämlich hinsichtlich ihrer Legierungszusammensetzung und/oder hinsichtlich der Menge der Legierungsbestandteile.

Aus den Bunkern 13 können somit unterschiedliche Fraktionen der Schrottteile abgezogen und einer Mischvorrichtung 14 zugeführt werden. Eine solche Mischvorrichtung 14 kann beispielsweise eine Rüttelwanne sein. Es besteht aber auch die Möglichkeit, dass eine solche Mischvorrichtung 14 Mischwerkzeuge, wie beispielsweise Schnecken aufweist, die der Vergleichmäßigung der unterschiedlichen Fraktionen an Schrottteilen aus den Bunkern 13 in der Mischvorrichtung 14 dienen.

Sobald der Mischvorgang in der Mischvorrichtung 14 abgeschlossen ist, übergibt die Mischvorrichtung 14 die Zusammensetzung aus unterschiedlichen Chargen von Schrottteilen einem weiteren Stetigförderer 15, der die Zusammensetzung aus Schrottteilen einer Pressvorrichtung 16, nämlich einem Schraubenextruder zuführt. Die Zuführung erfolgt hierbei dosiert, so dass die Pressvorrichtung 16 konstant mit einer vorbestimmten Menge an Schrottteilen befüllt wird. Bevorzugterweise erfolgt die Zuführung zum Schrauben- oder Schneckenextruder kontinuierlich, zumindest aber so, dass über den Schraubenextruder ausgangsseitig kontinuierlich Strangmaterial 17 abgeführt werden kann.

Im Schraubenextruder werden die, zugeführten Schrottteile verdichtet und infolge dessen auf eine Temperatur erhitzt, die der Übergangstemperatur zwischen fest und flüssig zumindest eines Teils der Schrottteile entspricht. An der Schwelle zur Übergangstemperatur ist der sog. thixotrope Zustand der erhitzten Schrottteile erreicht, was zu einer Fließfähigkeit infolge einer verringerten Viskosität führt. Die so erhitzten Schrottteile werden durch die extrudereigene Matrize endseititg durchgepresst, so dass es zur kontinuierlichen Ausgabe von Strangmaterial 17 kommt. Das Strangmaterial 17 wird sodann mit einer Schneidvorrichtung 18 bedarfsgerecht abgelängt und anschließend als Aufgabegut 1 beispielsweise auf einer Palette 19 gestapelt.

Die Verwendung eines Extruders ist beim Extrudieren von Material mit hoher Viskosität, wie beispielsweise Aluminium vorteilhaft. Hierzu ist eine spezielle Ausgestaltung der Extruderschnecke in Kombination mit einer speziellen Ausgestaltung der Extrusionskammer vorgesehen, um den rotierenden Fluss des Metalls zu beschränken. Durch diese Ausgestaltung wird der erforderliche Verdichtungs- und Extrusionsdruck erzielt. Beim Extrudieren von Aluminiumschrott erreicht der Aluminiumschrott im Extruder eine Temperatur, in der der Aluminiumschrott aneinander aber auch an der Wandung des Extruders beziehungsweise der Extruderschnecke anhaftet. Im Weiteren wird der Aluminiumschrott geknetet und erreicht auf diese Weise eine höhere Temperatur, wobei sodann ein Stopfen aus solidem Material am Ende der Extruderschnecke ausgebildet wird, die von nachfolgendem Material in eine Extrusionskammer geschoben wird. Der Aluminiumschrott verlässt sodann die Extruderkammer als kontinuierliches Strangmaterial und kann in bedarfsgerechtes Aufgabegut 1, beispielsweise in Form von Masseln abgelängt werden.

### Bezugszeichen

- 1: Aufgabegut
- 2: Lagerbereich
- 3: Stetigförderer
- 4: Stetigförderer
- 5: Stetigförderer
- 6: Öffnungsschieber
- 7: Zerkleinerungsvorrichtung
- 8: Walze
- 9: Siebeinrichtung
- 10: Vorratsbehälter
- 11: Stetigförderer
- 12: Schurre
- 13: Bunker
- 14: Mischvorrichtung
- 15: Stetigförderer
- 16: Pressvorrichtung
- 17: Strangmaterial
- 18: Schneideinrichtung
- 19: Palette

## Patentansprüche

1. Verfahren zur Herstellung von stückigem Aufgabegut (1) aus Metall, insbesondere Aluminium und/oder Aluminiumlegierungen, für eine Metall- insbesondere Aluminiumgießanlage, bei dem Schrottteile aus Metall, insbesondere aus Aluminium und/oder Aluminiumlegierungen nach ihren Legierungsbestandteilen und/oder Legierungsgehalten sortiert und anschließend ausgehend von einer zu erzeugenden Legierung im Aufgabegut (1) die Schrottteile zu einer, eine homogene Legierungsverteilung aufweisenden Zusammensetzung gemischt und einer Presse zugeführt werden, in der die Schrottteile der Zusammensetzung mit einem Druck beaufschlagt werden, der die Schrottteile unter Erzeugung einer Temperatur verdichtet, wobei die Schrottteile infolge der Druckbeaufschlagung bis zur Übergangstemperatur zwischen fest und flüssig zumindest eines Teils der Schrottteile und/oder deren Legierungen und/oder deren Legierungsbestandteilen erhitzt werden, bevor das Aufgabegut (1) in einer bestimmten geometrischen Form ausgegeben wird.

2. Verfahren nach Anspruch 1, **dadurch gekennzeichnet, dass** die Schrottteile infolge der Druckbeaufschlagung auf eine Temperatur erhitzt werden, die einem Schmelzpunkt zumindest eines Teils der Schrottteile und/oder deren Legierungen und/oder deren Legierungsbestandteilen entspricht.

3. Verfahren nach Anspruch 1 oder 2, **dadurch gekennzeichnet, dass** die Schrottteile vor der Sortierung zerkleinert werden.

4. Verfahren nach Anspruch 3, **dadurch gekennzeichnet, dass** die Schrottteile vor der Zerkleinerung entsprechend der zu erzeugenden Legierung im Aufgabegut (1) zusammengesetzt und einer Zerkleinerungsvorrichtung (7) zugeführt werden.

5. Verfahren nach einem der vorangehenden Ansprüche, **dadurch gekennzeichnet, dass** die homogene Zusammensetzung einem Extruder, vorzugsweise einem Schneckenextruder als Pressvorrichtung (16) zugeführt wird.

6. Verfahren nach einem der vorangehenden Ansprüche, **dadurch gekennzeichnet, dass** einzelne Fraktionen der Schrottteile mit bekannter Zusammensetzung, insbesondere Legierung in einer für die zu erzeugende Legierung im Aufgabegut (1) aus einer Bevorratung abgezogen und einer Mischeinrichtung zugeführt werden.

7. Verfahren nach einem der vorangehenden Ansprüche, **dadurch gekennzeichnet, dass** das Aufgabegut als kontinuierliches Strangmaterial (17) abgezogen und bedarfsgerecht abgelängt wird.

8. Verfahren nach einem der vorangehenden Ansprüche, **dadurch gekennzeichnet, dass** als Schrottteile Metallteile, wie Späne, Staub, Schmelzenrückstände aus der Produktion von Metallteilen, wie insbesondere der Herstellung von Aluminiumgussteilen, Aluminiumstanzteilen oder dergleichen, insbesondere aus der Verwendung des Aufgabeguts (1) verwendet werden.

9. Vorrichtung zur Herstellung von stückigem Aufgabegut (1) aus Metall, insbesondere Aluminium und/oder Aluminiumlegierungen, für eine Metall-, insbesondere Aluminiumgießanlage, insbesondere zur Durchführung des Verfahrens nach den Ansprüche 1 bis 8, mit einer, mehrere Lagerbereiche (2) für Schrottteile aus Metall, insbesondere aus Aluminium und/oder Aluminiumlegierungen, nach ihren Legierungsbestandteilen und/oder Legierungsgehalten aufweisenden Bevorratungseinrichtung, einer Mischvorrichtung (14), in der die aus den Lagerbereichen (2) in einem vorbestimmten Verhältnis abgezogenen Schrottteile zur Erzielung einer zu erzeugenden Legierung im Aufgabegut (1) zu einer, eine homogene Legierungsverteilung aufweisenden Zusammensetzung gemischt werden und einer Pressvorrichtung (16), der die Zusammensetzung zugeführt und in der die Zusammensetzung mit einem Druck unter Erzeugung einer Temperatur verdichtet wird, wobei die Schrottteile infolge der Druckbeaufschlagung bis zur Übergangstemperatur zwischen fest und flüssig zumindest eines Teils der Schrottteile und/oder deren Legierungen und/oder deren Legierungsbestandteilen erhitzt werden, bevor das Aufgabegut (1) in einer bestimmten geometrischen Form ausgegeben wird.

10. Vorrichtung nach Anspruch 9, **dadurch gekennzeichnet, dass** der Bevorratungseinrichtung eine Zerkleinerungsvorrichtung (7) nachgeschaltet ist

11. Vorrichtung nach einem der Ansprüche 9 oder 10, **dadurch gekennzeichnet, dass** die Pressvorrichtung (16) als Extruder ausgebildet ist.

12. Vorrichtung nach Anspruch 11, **dadurch gekennzeichnet, dass** die Pressvorrichtung (16) als Schneckenextruder ausgebildet ist.

13. Vorrichtung nach Anspruch 11, **dadurch gekennzeichnet, dass** die Pressvorrichtung (16) als Kolbenextruder ausgebildet ist.

14. Vorrichtung nach einem der vorangehenden Ansprüche 9 bis 13, **dadurch gekennzeichnet, dass** der Pressvorrichtung (16) eine Mischeinrichtung (14) vorgeschaltet ist, der einzelne, aus der Bevorratungseinrichtung abgezogene Fraktionen der Schrottteile mit bekannter Zusammensetzung, insbesondere Legierung in einer für die zu erzeugende Legierung im Aufgabegut zugeführt werden.

15. Vorrichtung nach einem der vorangehenden Ansprüche 9 bis 14, **dadurch gekennzeichnet, dass** der Pressvorrichtung (16) eine Schneideinrichtung (18) nachgeschaltet ist, mit der das als kontinuierliches Strangmaterial (17) abgezogene Aufgabegut (1) bedarfsgerecht abgelängt wird.

16. Vorrichtung nach einem der vorangehenden Ansprüche 9 bis 15, **dadurch gekennzeichnet, dass** der Pressvorrichtung (16) eine Messeinrichtung nachgeschaltet ist.

## Claims

1. Method for producing feedstock (1) in piece form from metal, in particular aluminum and/or aluminum alloys, for a metal casting plant, in particular an aluminum casting plant, in which scrap parts of metal, in particular of aluminum and/or aluminum alloys, are sorted according to their alloy constituents and/or alloy contents and then, starting from an alloy to be produced in the feedstock (1), the scrap parts are mixed to form a composition having a homogeneous alloy distribution and are fed to a press, in which the scrap parts of the composition are subjected to a pressure which compacts the scrap parts while generating a temperature, wherein the scrap parts are heated as a result of the pressurization up to the transition temperature between solid and liquid of at least part of the scrap parts and/or their alloys and/or their alloy constituents before the feed material (1) is discharged in a specific geometric form.

2. Method according to claim 1, **characterized in that**, as a result of the pressurization, the scrap parts are heated to a temperature corresponding to a melting point of at least part of the scrap parts and/or their alloys and/or their alloy constituents.

3. Method according to claim 1 or 2, **characterized in that** the scrap parts are comminuted before sorting.

4. Method according to claim 3, **characterized in that** the scrap parts are composed before comminution according to the alloy to be produced in the feedstock (1) and are fed to a comminution device (7).

5. Method according to any of the preceding claims, **characterized in that** the homogeneous composition is fed to an extruder, preferably a screw extruder, as a pressing device (16).

6. Method according to any of the preceding claims, **characterized in that** individual fractions of the scrap parts with a known composition, in particular alloy, are withdrawn from a stockpile in a form suitable for the alloy to be produced in the feedstock (1) and are fed to a mixing device.

7. Method according to any of the preceding claims, **characterized in that** the feedstock is pulled off as continuous strand material (17) and cut to length as required.

8. Method according to any of the preceding claims, **characterized in that** metal parts such as chips, dust, melt residues from the production of metal parts, such as in particular the production of aluminum castings, aluminum stampings or the like, in particular from the use of the feedstock (1), are used as scrap parts.

9. Device for producing feedstock (1) in piece form from metal, in particular aluminum and/or aluminum alloys, for a metal casting plant, in particular an aluminum casting plant, in particular for carrying out the process according to claims 1 to 8, having a storage device which has a plurality of storage regions (2) for scrap parts from metal, in particular from aluminum and/or aluminum alloys, according to their alloy constituents and/or alloy contents, a mixing device (14), in which the scrap parts drawn off from the storage areas (2) in a predetermined ratio are mixed to form a composition having a homogeneous alloy distribution in order to obtain an alloy to be produced in the feedstock (1), and a pressing device (16) to which the composition is fed and in which the composition is compacted with pressure while generating a temperature, wherein the scrap parts are heated as a result of the pressurization up to the transition temperature between solid and liquid of at least part of the scrap parts and/or their alloys and/or their alloy constituents before the feed material (1) is discharged in a specific geometric form.

10. Device according to claim 9, **characterized in that** a comminution device (7) is connected downstream of the storage device.

11. Device according to one of claims 9 or 10, **characterized in that** the pressing device (16) is designed as an extruder.

12. Device according to claim 11, **characterized in that** the pressing device (16) is designed as a screw extruder.

13. Device according to claim 11, **characterized in that** the pressing device (16) is designed as a piston extruder.

14. Device according to any of the preceding claims 9 to 13, **characterized in that** the pressing apparatus (16) is preceded by a mixing device (14) to which individual fractions of the scrap parts of known composition, in particular alloy, pulled off from the storage device are fed in a composition suitable for the alloy to be produced in the feedstock.

15. Device according to any of the preceding claims 9 to 14, **characterized in that** a cutting device (18) is connected downstream of the pressing device (16), with which the feedstock (1) pulled off as continuous strand material (17) is cut to length as required.

16. Device according to any of the preceding claims, **characterized in that** a measuring device is connected downstream of the pressing apparatus (16).

## Revendications

1. Procédé pour la préparation de charges (1) en morceaux en métal, en particulier d'aluminium et/ou d'alliages d'aluminium, pour une installation de coulée de métal, en particulier d'aluminium, dans lequel des pièces de ferraille de métal, en particulier d'aluminium et/ou d'alliages d'aluminium, sont triées selon leurs composants d'alliage et/ou leurs teneurs en alliage et ensuite, en partant d'un alliage à produire dans la charge (1), les pièces de ferraille sont mélangées en une composition présentant une répartition homogène des alliages et sont amenées à une presse, dans laquelle les pièces de ferraille de la composition sont soumises à une pression qui comprime les pièces de ferraille en générant une température, les pièces de ferraille, suite à la mise sous pression, étant chauffées jusqu'à la température de transition entre le solide et le liquide d'au moins une partie des pièces de ferraille et/ou de leurs alliages et/ou de leurs composants d'alliage, avant que la charge (1) ne soit délivré sous une forme géométrique déterminée.

2. Procédé selon la revendication 1, **caractérisé en ce que** les pièces de ferraille sont chauffées, suite à la mise sous pression, à une température correspondant à un point de fusion d'au moins une partie des pièces de ferraille et/ou de leurs alliages et/ou de leurs composants d'alliage.

3. Procédé selon la revendication 1 ou 2, **caractérisé en ce que** les pièces de ferraille sont broyées avant d'être triées.

4. Procédé selon la revendication 3, **caractérisé en ce que** les pièces de ferraille sont assemblées avant le broyage en fonction de l'alliage à produire dans la charge (1) et sont amenées à un dispositif de broyage (7).

5. Procédé selon l'une des revendications précédentes, **caractérisé en ce que** la composition homogène est amenée à une extrudeuse, de préférence une extrudeuse à vis, en tant que dispositif de pressage (16).

6. Procédé selon l'une des revendications précédentes, **caractérisé en ce que** des fractions individuelles des pièces de ferraille de composition connue, en particulier l'alliage, sont retirées d'un stockage dans un état approprié à l'alliage à produire dans la charge (1) et sont amenées à un dispositif de mélange.

7. Procédé selon l'une des revendications précédentes, **caractérisé en ce que** la charge est retirée sous forme de matériau continu (17) et est coupé à longueur en fonction des besoins.

8. Procédé selon l'une des revendications précédentes, **caractérisé en ce que** l'on utilise comme pièces de ferraille des pièces métalliques telles que des copeaux, de la poussière, des résidus de fusion provenant de la production de pièces métalliques, comme en particulier la fabrication de pièces coulées en aluminium, de pièces découpées en aluminium ou similaires, en particulier de l'utilisation de la charge (1).

9. Dispositif pour la préparation de charges (1) en morceaux en métal, en particulier en aluminium et/ou en alliages d'aluminium, pour une installation de coulée de métal, en particulier d'aluminium, en particulier pour la mise en œuvre du procédé selon les revendications 1 à 8, avec un dispositif d'approvisionnement présentant plusieurs zones de stockage (2) pour des pièces de ferraille en métal, en particulier en aluminium et/ou en alliages d'aluminium, selon leurs composants d'alliage et/ou leurs teneurs en alliage, un dispositif de mélange (14), dans lequel les pièces de ferraille extraites des zones de stockage (2) dans un rapport prédéterminé sont mélangées pour obtenir un alliage à produire dans la charge (1) en une composition présentant une répartition homogène des alliages, et un dispositif de pressage (16) auquel la composition est amenée et dans lequel la composition est comprimée sous pression en générant une température, les pièces de ferraille étant chauffées par suite de la mise sous pression jusqu'à la température de transition entre le solide et le liquide d'au moins une partie des pièces de ferraille et/ou de leurs alliages et/ou de leurs composants d'alliage, avant que la charge (1) ne soit délivré sous une forme géométrique déterminée.

10. Dispositif selon la revendication 9, **caractérisé en ce qu'**un dispositif de broyage (7) est monté en aval du dispositif d'approvisionnement.

11. Dispositif selon l'une des revendications 9 ou 10, **caractérisé en ce que** le dispositif de pressage (16) est conçu comme une extrudeuse.

12. Dispositif selon la revendication 11, **caractérisé en ce que** le dispositif de pressage (16) est conçu comme une extrudeuse à vis.

13. Dispositif selon la revendication 11, **caractérisé en ce que** le dispositif de pressage (16) est conçu comme une extrudeuse à piston.

14. Dispositif selon l'une des revendications 9 à 13 précédentes, **caractérisé en ce que** le dispositif de pressage (16) est précédé d'un dispositif de mélange (14) auquel sont amenées des fractions individuelles, extraites du dispositif d'approvisionnement, des pièces de ferraille de composition connue, en particulier d'alliage dans une composition adaptée à l'alliage à produire dans le produit d'alimentation.

15. Dispositif selon l'une des revendications 9 à 14 précédentes, **caractérisé en ce qu'**un dispositif de coupe (18) est monté en aval du dispositif de pressage (16), avec lequel la charge (1) extrait sous forme de matériau extrudé continu (17) est coupé à longueur en fonction des besoins.

16. Dispositif selon l'une des revendications 9 à 15 précédentes, **caractérisé en ce qu'**un dispositif de mesure est monté en aval du dispositif de pressage (16).
